# EUROPÄISCHE PATENTANMELDUNG

(11) **EP 4 454 977 A1**
(43) Veröffentlichungstag der Anmeldung: **30.10.2024**
(21) Anmeldenummer: 24172677.7
(22) Anmeldetag: 26.04.2024
(51) Int. Cl.: B62D 21/12, B62D 21/14, B62D 21/18, B60D 1/48, B60P 3/32, B60D 1/52

(54) **FREIZEITFAHRZEUG, RAHMENVERLÄNGERUNG ANORDNUNG MIT EINER EINRICHTUNG FÜR EINE ANHÄNGERKUPPLUNG UND MODULARES SYSTEM ZUR BILDUNG EINER RAHMENVERLÄNGERUNG**

(30) Priorität: 26.04.2023 DE 102023110819
(71) Anmelder: Erwin Hymer Group SE, 88339 Bad Waldsee (DE)
(72) Erfinder: Kasten, Ole, 21680 Stade (DE); Telle, Maximilian, 21682 Stade (DE)
(74) Vertreter: Müller Schupfner & Partner Patent- und Rechtsanwaltspartnerschaft mbB (Muc)

(57) **Zusammenfassung**

Modulares System (2) zur Bildung einer Rahmenverlängerung (1) eines Freizeitfahrzeugrahmens (70) mit standardisierten Eigenschaften mit zumindest einem Endlosprofil (3), das zur Bildung der Rahmenverlängerung (1) dient, wobei aus dem zumindest einem Endlosprofil (3) mindestens zwei unterschiedliche Rahmenverlängerungen (1) mit standardisierten Eigenschaften ausgestaltbar sind. Vorgeschlagen wird, dass zumindest ein Querträger (56) vorgesehen ist, der zumindest im Wesentlichen aus einem Endlosprofil (3) gebildet ist, wobei der Querträger (56) im montierten Zustand an einem Heck (10) des Freizeitfahrzeugs angeordnet ist, und dass eine Einrichtung (75) für eine Anhängerkupplung (60) vorgesehen ist, die im montierten Zustand zumindest mit dem Querträger (56) verbunden ist. Ferner sind eine Anordnung (76) mit einem Querträger (56) und solch einer Einrichtung, (75), eine Rahmenverlängerung (1) und ein Freizeitfahrzeug (100) angegeben.

## Beschreibung

Die Erfindung betrifft ein Freizeitfahrzeug, eine Rahmenverlängerung und ein modulares System zur Bildung einer Rahmenverlängerung. Speziell betrifft die Erfindung das Gebiet der Wohnmobile und Wohnwagen.

Aus der DE 10 2021 115 073 A1 ist ein modulares System zur Bildung einer Rahmenverlängerung eines Wohnmobilfahrzeugrahmens bekannt. Die bekannte Rahmenverlängerung weist standardisierte Eigenschaften auf. Das bekannte modulare System weist ein Endlosprofil zur Bildung der Rahmenverlängerung auf, wobei aus dem Endlosprofil mindestens zwei unterschiedliche Rahmenverlängerungen mit standardisierten Eigenschaften gebildet werden können. Bei der bekannten Ausgestaltung sind ein Querprofil, das erste Längsprofil und das zweite Längsprofil der Rahmenverlängerung einstückig ausgebildet. An dem Endlosprofil kann eine Anhängerkupplung montiert werden, da das Endlosprofil viele Anbindungspunkte bietet.

Wenn je nach Fahrzeugmodell eigene individuelle Rahmenverlängerungen vorgesehen sind, dann hat dies eine große Vielfalt unterschiedlicher Rahmenverlängerungen zur Folge. Falls beispielsweise die von der Rahmenverlängerung getragene Garagenwanne ein höheres zulässiges Gesamtgewicht erhalten soll oder an die Rahmenverlängerung eine Anhängerkupplung montiert werden soll, so ist es möglich, die Rahmenverlängerung durch komplexe Adapter und Verstärkungen zu erweitern oder auszutauschen. Anhängerkupplungen können ebenfalls unterschiedlich ausgeführt und unterschiedlich an die Rahmenverlängerung angebunden sein.

Aufgabe der vorliegenden Erfindung ist es, ein Freizeitfahrzeug, eine Rahmenverlängerung, eine Anordnung mit einem Querträger und einer Einrichtung für eine Anhängerkupplung und ein modulares System zur Bildung einer Rahmenverlängerung anzugeben, die eine verbesserte Funktionsweise und/oder Ausgestaltung aufweisen. Es ist insbesondere eine Aufgabe der Erfindung, ein Baukastensystem für Rahmenverlängerungen von Freizeitfahrzeugen bereitzustellen, mithilfe dessen man eine Rahmenverlängerung für ein beliebiges Fahrzeugmodell bzw. eine möglichst große Anzahl von unterschiedlichen Fahrzeugmodellen herstellen kann, bei denen eine Anhängerkupplung benötigt wird. Eine weitere mögliche Aufgabe der 5 Erfindung kann darin bestehen, dass zum Anbau einer Anhängerkupplung an einer Rahmenverlängerung große Anbauten vermieden werden sollen. Es wird ebenfalls angestrebt, die Montage zu vereinfachen sowie die Logistik, einschließlich Lagerung und Bevorratung der Rahmenverlängerungen, zu vereinfachen.

Diese Aufgabe wird durch ein modulares System mit den Merkmalen des unabhängigen Patentanspruchs 1, eine Anordnung mit einem Querträger und einer Einrichtung für eine Anhängerkupplung mit den Merkmalen des Anspruchs 9, durch eine Rahmenverlängerung mit den Merkmalen des Patentanspruchs 10 und ein Freizeitfahrzeug mit den Merkmalen des Patentanspruchs 11 gelöst. Vorteilhafte Weiterbildungen der Erfindung sind in den Unteransprüchen angegeben.

Das Hinterwagenchassis ist nicht notwendigerweise ein Bestandteil des modularen Systems oder der Anordnung mit dem Querträger und der Einrichtung für eine Anhängerkupplung oder der Rahmenverlängerung. Insbesondere können das modulare System, diese Anordnung oder die Rahmenverlängerung auch unabhängig von einem Hinterwagenchassis hergestellt und vertrieben werden.

Die Aufgabe wird durch ein Modulares System zur Bildung einer Rahmenverlängerung eines Freizeitfahrzeugrahmens mit standardisierten Eigenschaften mit zumindest einem Endlosprofil, das zur Bildung der Rahmenverlängerung dient, gelöst, wobei aus dem zumindest einem Endlosprofil mindestens zwei unterschiedliche Rahmenverlängerungen mit standardisierten Eigenschaften ausgestaltbar sind, wobei zumindest ein Querträger vorgesehen ist, der zumindest im Wesentlichen aus einem Endlosprofil gebildet ist, wobei der Querträger im montierten Zustand an einem Heck des Freizeitfahrzeugs angeordnet ist, und wobei eine Einrichtung für eine Anhängerkupplung vorgesehen ist, die im montierten Zustand zumindest mit dem Querträger verbunden ist.

Ferner wird die Aufgabe durch eine Anordnung mit einem Querträger und einer Einrichtung für eine Anhängerkupplung, welche Anordnung aus solch einem modularen System hergestellt ist, gelöst. Außerdem wird die Aufgabe durch eine Rahmenverlängerung für ein Freizeitfahrzeug, welches aus solch einem modularen System hergestellt ist, gelöst. Ferner wird die Aufgabe durch ein Freizeitfahrzeug, insbesondere ein Wohnmobil oder einen Wohnwagen, mit solch einer Rahmenverlängerung gelöst.

Unter einem modularen System wird vorzugsweise eine Sammlung von Bausteinen oder Modulen verstanden, die auf verschiedene Art und Weise konfiguriert werden können und sich an unterschiedliche Bedürfnisse, insbesondere unterschiedliche Baugrößen, wie zum Beispiel Breite und Länge einer Rahmenverlängerung, anpassen lassen.

Unter einem Endlosprofil wird vorzugsweise ein Profil verstanden, welches eine sich wiederholende Längsstruktur aufweisen kann. Das Profil im Querschnitt senkrecht zu einer Längsachse ist hierbei entlang der Längsachse vorzugsweise im Wesentlichen gleichbleibend, die Struktur bzw. Muster, welches man erkennt, wenn man senkrecht zur Längsachse auf das Profil blickt, kann die oben genannte sich wiederholende Umlenkstruktur aufweisen.

Durch das erfindungsgemäße modulare System wird vorteilhafterweise erreicht, dass man mithilfe des modularen Systems innerhalb gewisser Grenzen Rahmenverlängerungen für ein beliebiges Fahrzeugmodell eines Wohnmobils herstellen kann.

Bei einer bevorzugten Ausgestaltung kann ein einziges Endlosprofil mit einer geeignet gewählten Periode mit vorzugsweise einer geringen Anzahl an Adaptern bzw. Verbindungselementen zur Herstellung einer Rahmenverlängerung dienen. Eine Breite und eine Länge der Rahmenverlängerung können ein ganzzahliges Vielfältiges der Periode des Endlosprofils sein, wobei somit, falls die Periode klein genug gewählt ist, für die Anforderungen eines Wohnmobils nahezu beliebig lange und breite Rahmenverlängerungen möglich sind.

Ein weiterer Vorteil des erfindungsgemäßen modularen Systems kann darin liegen, dass die Varianz bzw. Anzahl der benötigten Rahmenverlängerungen bzw. Systemen zur Herstellung von Rahmenverlängerungen deutlich reduziert werden kann. Weiterhin können durch die Anwendung eines Baukastensystems normierte Rahmenverlängerungen hergestellt werden, Kosten und Gewicht der Rahmenverlängerungen reduziert werden und eine Varianz der Kosten und des Gewichts deutlich reduziert werden. Durch die Vereinheitlichung der Rahmenverlängerung können größere Mengen an Bauteilen gleicher Art bestellt werden, was vorteilhafterweise Kosten reduziert. Durch ein reduziertes Gewicht und gegebenenfalls eingebauten Montagehilfen kann ferner vorteilhafterweise eine Zeitersparnis in der Produktion gewonnen werden. Eine schnelle Lieferung der Bauteile ist ebenfalls vorteilhaft.

Durch die effiziente und flexible Fertigungsmethode kann schnell auf Engpässe bei bestimmten Varianten reagiert werden, was zu geringen Umrüstzeiten führt. Eine hohe Prozessqualität kann in der Fertigung durch das Endlosprofil und das Fertigungsverfahren erzielt werden. Ein weiterer Vorteil kann darin liegen, dass die Vereinheitlichung bzw. Standardisierung durch das Baukastenprinzip eine Vereinfachung der realen und simulativen Überprüfung ergeben kann, wodurch neue Konzepte schneller freigegeben werden können, was wiederum vorteilhafterweise die Entwicklungsdauer und -kosten weiter reduziert. Es können insgesamt viel weniger Real- und Komponententests benötigt werden, was abermals Zeit und Kosten spart.

Zudem kann sich durch gleiche Bauteile eine Standardisierung bei unterschiedlichen Fahrzeugen und Herstellern ergeben, was auch nach dem Verkauf des Freizeitfahrzeugs vorteilhaft ist. Wenn ein Fehler in einem Bereich auftritt, kann dies auch bei anderen Fahrzeugen überprüft werden. Taucht dieser Fehler jedoch nur bei einem Fahrzeugtyp auf, kann ein Fehler an der Rahmenverlängerung ausgeschlossen werden, wodurch die Fehlersuche beschleunigt wird. Zudem können Änderungen und Anpassungen schneller an alle Fahrzeugmodelle angetragen werden, da alle auf der gleichen Basis an Bauteilen arbeiten. Durch die Vereinheitlichung einer Rahmenverlängerung können wiederum auch die Varianz der Zukaufteile reduziert werden und die Menge auf das reduzierte Sortiment erhöht werden, was wiederum die Kosten für die Zukaufteile senkt.

Bevorzugt ist das Endlosprofil aus einem metallischen Werkstoff, bevorzugt Stahl oder Aluminium, gefertigt. Alternativ kann beispielsweise ein thermoplastischer glasfaserverstärkter Kunststoff verwendet werden. Bevorzugt wird das Endlosprofil mittels Rollformen hergestellt. Hierzu wird das Profil in einer Anlage gestanzt, gewalzt und auf Länge geschnitten. Das Verfahren weist eine hohe Prozessgenauigkeit auf. Ebenfalls ist die Anlage äußerst flexibel und kann in kürzester Zeit umgerüstet werden, so dass die Endlosprofile in kürzester Zeit produziert werden können. Durch das Rollformen können höherfeste Werkstoffe umgeformt werden. Materialreduktion und Materialanhäufungen sind lokal möglich, so dass Positionierhilfen, z.B. Lochbilder, direkt in das Profil eingebracht werden können. Alternativ kann das Endlosprofil mittels Laserbearbeitung von Extrusionsprofilen hergestellt werden.

Vorzugsweise weist das Endlosprofil im Querschnitt eine Basis bzw. einen Rücken auf, von dem ein oder mehr Schenkel, vorzugsweise zwei Schenkel, abstehen. Besonders bevorzugt sind der oder die Schenkel an ihren Enden nochmals nach innen gebogen, um eine noch höhere Stabilität und Biegesteifigkeit zu erreichen. Insbesondere kann das Endlosprofil im Querschnitt L-förmig, U-förmig oder C-förmig sein. Vorzugsweise ist das Endlosprofil aus einem Metallband hergestellt, wobei die gewünschte Profilform durch Rollformen eingebracht wird.

Vorteilhaft ist es, dass die Einrichtung für die Anhängerkupplung als Aufnahmeeinrichtung, insbesondere als Schwanenhalsaufnahme, ausgestaltet ist. Hierdurch kann je nach Anwendungsfall eine geeignete Anhängerkupplung realisiert werden. Insbesondere kann gegebenenfalls eine Auswahl aus zumindest zwei verschiedenen Arten von Schwanenhälsen, insbesondere unterschiedlich langen Schwanenhälsen, getroffen werden.

Vorteilhaft ist es, dass zumindest ein weiterer Querträger vorgesehen ist und dass der weitere Querträger im montierten Zustand zumindest in einem Bereich des Querträgers, in dem die Einrichtung für die Anhängerkupplung mit dem Querträger verbunden ist, zumindest mittelbar mit dem Querträger verbunden ist. Dadurch ist eine mechanische Stabilität verbessert. Insbesondere können Belastungen, die in einem Anhängerbetrieb über die Anhängerkupplung in die Rahmenverlängerung eingeleitet werden, dadurch vorteilhaft aufgenommen werden.

Vorteilhaft ist es, dass zumindest ein Distanzelement vorgesehen ist, das im montierten Zustand zumindest an dem Bereich des Querträgers, in dem die Einrichtung für die Anhängerkupplung mit dem Querträger verbunden ist, zwischen dem Querträger und dem weiteren Querträger angeordnet ist. Hierdurch wird die Stabilität weiter verbessert. Insbesondere können hierdurch Zug- und Druckkräfte entlang der Fahrtrichtung aufgenommen werden.

Vorteilhaft ist es, dass zumindest der Querträger, der weitere Querträger und das Distanzelement im montierten Zustand miteinander verbunden, insbesondere miteinander verschraubt, sind. Dadurch kann eine hohe Stabilität erzielt werden. Insbesondere können Kräfte dadurch vorteilhaft auf Längsträger und gegebenenfalls Längsträgerverstärkungen geleitet werden. Hierfür können auch Diagonalstreben eingesetzt werden, die im Bereich der Anhängerkupplung beziehungsweise des Distanzelements mit zumindest einem Querträger verbunden sind.

Vorteilhaft ist es, dass zumindest ein Verbindungselement vorgesehen ist, das beziehungsweise die im montierten Zustand einerseits zumindest mittelbar an dem Querträger und andererseits zumindest mittelbar an dem weiteren Querträger abgestützt ist beziehungsweise sind. Solch ein Verbindungselement kann beispielsweise eine Schraube und eine Mutter sowie gegebenenfalls Unterlegscheiben, Federringe oder dergleichen aufweisen.

Vorteilhaft ist es, dass das Distanzelement zumindest ein Innengewinde aufweist. Hierdurch kann ein Verbindungselement, das ein Außengewinde aufweist, direkt in das Innengewinde des Distanzelements eingeschraubt werden. Hierbei können auch zwei Innengewinde vorgesehen sein, um ein Einschrauben von zwei Verbindungselementen zu ermöglichen. Die Verbindung kann gegebenenfalls so ausgeführt sein, dass diese von einem Nutzer nicht zu lösen ist, wobei ein gegebenenfalls erforderliches Lösen eine Werkstattarbeit darstellt. Dennoch kann der Schwanenhals gegebenenfalls von einem Nutzer demontierbar sein.

Vorteilhaft ist es, dass das Distanzelement zumindest eine Durchgangsbohrung aufweist, durch die sich im montierten Zustand ein Verbindungselement erstreckt, das einerseits zumindest mittelbar an dem Querträger und andererseits zumindest mittelbar an dem weiteren Querträger abgestützt ist. Hierbei kann das Verbindungselement beispielsweise eine Schraube und eine Mutter sowie gegebenenfalls Unterlegscheiben, Federringe oder dergleichen aufweisen. Somit wird ein zuverlässige Verbindung ermöglicht, die beispielsweise im Rahmen einer Werkstattarbeit einfacher zu demontieren ausgeführt sein kann.

Vorteilhaft ist es, dass zumindest ein linker Längsträger vorgesehen ist, dass zumindest eine linke Längsträgerverstärkung vorgesehen ist, die im montierten Zustand zumindest abschnittsweise an dem linken Längsträger angeordnet ist, dass zumindest ein Distanzelement vorgesehen ist, das im montierten Zustand zwischen dem linken Längsträger und der linken Längsträgerverstärkung angeordnet ist, und dass der linke Längsträger, die linke Längsträgerverstärkung und das Distanzelement im montierten Zustand miteinander verbunden sind. Hierdurch ergibt sich eine weiter verbesserte Stabilität. Außerdem kann eine Anbindung an ein Hinterwagenchassis verbessert ausgestaltet werden.

Vorteilhaft ist es, dass zumindest ein rechter Längsträger vorgesehen ist, dass zumindest eine rechte Längsträgerverstärkung vorgesehen ist, die im montierten Zustand zumindest abschnittsweise an dem rechten Längsträger angeordnet ist, dass zumindest ein Distanzelement vorgesehen ist, das im montierten Zustand zwischen dem rechten Längsträger und der rechten Längsträgerverstärkung angeordnet ist, und dass der rechte Längsträger, die rechte Längsträgerverstärkung und das Distanzelement im montierten Zustand miteinander verbunden sind. Hierdurch ergeben sich auf der rechten Seite entsprechende Vorteile wie auf der linken Seite. Besonders bevorzugt ist hierbei eine symmetrische Ausgestaltung auf der rechten und linken Seite.

Vorteilhaft ist es, dass die linke Längsträgerverstärkung einen Ausschnitt aufweist und dass ein Adapter für die linke Längsträgerverstärkung im montierten Zustand so an der linken Längsträgerverstärkung angeordnet ist, dass ein Befestigungsmittel eines hinteren Blattfederauges des Hinterwagenchassis im montierten Zustand zumindest teilweise in den Ausschnitt der linken Längsträgerverstärkung ragt. Hierdurch wird eine solche Ausgestaltung des Hinterwagenchassis ermöglicht. Eine Funktionsfähigkeit des Hinterwagenchassis bleibt hierbei erhalten.

Vorteilhaft ist es, dass die rechte Längsträgerverstärkung einen Ausschnitt aufweist und dass ein Adapter für die rechte Längsträgerverstärkung im montierten Zustand so an der rechten Längsträgerverstärkung angeordnet ist, dass ein Befestigungsmittel eines hinteren Blattfederauges des Hinterwagenchassis im montierten Zustand zumindest teilweise in den Ausschnitt der rechten Längsträgerverstärkung ragt. Hierdurch ergeben sich auf der rechten Seite entsprechende Vorteile wie auf der linken Seite. Besonders bevorzugt ist hierbei eine symmetrische Ausgestaltung auf der rechten und linken Seite.

Die Rahmenverlängerung kann bei einer bevorzugten Ausgestaltung so ausgestaltet werden, dass eine vollständige Demontage einer vorgelagerten Ausbaustufe, zum Beispiel ohne Längsträgerverstärkungen und/oder ohne Anhängerkupplung, zur Ergänzung für die nächsten Ausbaustufe nicht erforderlich ist. Hierdurch können vorgelagerte Ausbaustufen bereits vormontiert und dann in Bezug auf den jeweiligen Anwendungsfall ausgebaut werden. Dies macht Optimierungen des Herstellungsprozesses möglich.

Der Einsatz eines Distanzelements, das insbesondere Distanzhülsen aufweisen kann, zwischen einem Längsträger der Basisausführung (Basis-Längsträger) und einer Längsträgerverstärkung (Verstärkungslängsträger) kann für die Montage der Anhängerkupplung zwingend notwendig sein, um die Kraftübertragung eines äußeren Verbindungswinkels, der als Anhängerkupplungswinkel ausgeführt sein kann, auf die Längsträgerverstärkung zu gewährleisten. Hierbei kann der Verbindungswinkel beziehungsweise der Anhängerkupplungswinkel in Fahrtrichtung so lang ausgeführt sein, dass er nicht nur den Längsträger am Heck umfasst, sondern auch eine direkte mechanische Verbindung mit der Längsträgerverstärkung ermöglicht.

Die Form des Profils der Längsträger (Basisprofil) kann erfordern, dass mindestens eine Distanzhülse beziehungsweise ein Distanzstück oder dergleichen pro linker und rechter Seite eingesetzt wird. Insbesondere kann dies dann erforderlich sein, wenn der Querschnitt eines Verstärkungslängsträgers nicht gleichbleibend ist und somit die Aufnahme des Basis-Adapters für das Hinterwagenchassis ist für den Verstärkungslängsträger nicht genutzt werden kann.

Ein weiteres bevorzugtes Merkmal ist ein großer Ausschnitt, der beispielsweise als Ausstanzung ausgebildet sein kann, in einer Längsträgerverstärkung, wobei der Ausschnitt vorzugsweise so positioniert ist, dass die Befestigungsschraube der hinteren Blattfederauges nicht mit dem Verstärkungsträger kollidiert. Der Ausschnitt ist bei einer bevorzugten Ausgestaltung hierbei geometrisch gleich ausgeformt, wie die weiteren großen Ausschnitte (Aussparungen) der Längs- und Querträger beziehungsweise des Endlosprofils.

Eine weitere bevorzugte Ausgestaltung ist, dass die beiden Querträger mittels zumindest einer Distanzhülse miteinander verbunden werden. Die Schrauben die dieses Paket anschließend miteinander verspannen können, klemmen die Aufnahme des Schwanenhalses, den Querträger für die Anhängerkupplung, die zumindest eine Distanzhülse, den Querträger der Basis und gegebenenfalls die Winkel der Diagonalstreben (Quersteifen). Dies gilt entsprechend für abgewandelte Ausgestaltungen. Somit kann eine Kraftübertragung in der Mitte der Querträger und auf die Quersteifen entstehen.

Als weitere Ausgestaltung und als weiterer Vorteil der verschraubten Lösung können realisiert werden, dass verschiedene Materialien, Materialgüten und Materialstärken je nach Anforderungsprofil miteinander kombiniert werden. Durch eine Differenzialbauweise ist es weiterhin möglich, verschiedene Anhängerkupplungskugeln zu verbauen und nur die Winkel zur Aufnahme des Schwanenhalses auszuwechseln oder wegzulassen. Die restlichen Bauteile und Verbindungsmaterialien können gleich bleiben. So kann an die gleiche Rahmenverlängerung ein Schwanenhals mit anderer Geometrie montiert werden. Oder es kann ein abnehmbares Anhängerkupplungselement, insbesondere ein Schwanenhals, an die Anordnung mit dem Querträger und der Einrichtung für die Anhängerkupplung geschraubt werden, wobei die Anordnung die genannten Bauteile aufweisen kann.

Ein Lochmuster zur Anbindung der Anhängerkupplung kann immer identisch ausgeführt sein, zum Beispiel mit 100 mm x 60 mm (BxH) oder einem Vielfachen davon. Es kann zur Anbindung der AHK-Winkel und zur Einbringung einer Distanzhülse eingehalten werden. Eine Distanzhülse für die Anhängerkupplung kann ggf. in ihrer Ausführung variieren werden. Beispielsweise können anstatt einer Hülse mit 100 mm x 60 mm mit vier Durchführungen zwei separate Hülsen mit Durchführungen im Abstand von 60 mm beziehungsweise 100 mm (vertikal/horizontal) verwendet werden. Dies ist auch bei einem Vielfachem des Lochmuster denkbar.

Der AHK-Winkel kann ebenfalls das Lochmuster 100 mm x 60 mm aufweisen, um diesen an den Längsträgern zu befestigen. Die Anhängerkupplung kann mittels langer Schrauben an dem Querträger der Basis und dem Querträger für die Anhängerkupplung geklemmt werden. Hierzu kann eine Distanzhülse zwischen den beiden Profilen angeordnet werden. Diese weist vorzugsweise zumindest teilweise ein dem Lochbild der Querträger entsprechendes Lochbild auf. Ausreichend lange Schrauben können durch die Aufnahme der Anhängerkupplung, also die Aufnahme für den Schwanenhals, gesteckt und verschraubt werden und klemmen dann zumindest das Paket aus der Aufnahme (Aufnahmeeinrichtung) für die Anhängerkupplung, den Querträger für die Anhängerkupplung und den Querträger für die Basis. Dieses Paket kann noch durch die Winkel der Quersteifen ergänzt werden, an denen die Quersteifen verschraubt werden.

Die Distanzhülse für die Anhängerkupplung ist vorzugsweise zumindest mittig im 5 Bereich der Anbindung der Anhängerkupplung vorhanden, kann jedoch in vorteilhafter Weise auch durch zusätzliche Distanzhülsen ergänzt werden, wenn beispielsweise die strukturelle Baugruppenintegrität dies erfordert, was beispielsweise an den Seiten, insbesondere an den Längsträgern, erfolgen kann. Als Weiterbildung können in die Distanzhülse auch Gewinde für die Anhängerkupplung eingebracht werden, wobei der Querträger der Basis und der Querträger für die Anhängerkupplung jeweils einseitig mit der Distanzhülse für die Anhängerkupplung verschraubt werden können. Außerdem können in vorteilhafter Weise Weiterbildungen und Vorteile realisiert sein, die sich insbesondere in Bezug auf eine Ausgestaltung der Rahmenverlängerung ergeben können.

Vorteilhaft ist es, dass zumindest ein Versteifungselement, das im montierten Zustand mit dem linken Längsträger und dem Querträger verbunden ist, als Versteifungswinkel ausgebildet ist, und/oder dass zumindest ein Versteifungselement, das im montierten Zustand mit dem rechten Längsträger und dem Querträger verbunden ist, als Versteifungswinkel ausgebildet ist. Dadurch kann eine hohe Stabilität der Rahmenverlängerung erzielt werden. Zugleich kann die Anzahl an unterschiedlichen Bauteilen optimiert werden.

Vorteilhaft ist es, dass zumindest eine linke Längsträgerverstärkung vorgesehen ist, die im montierten Zustand zumindest abschnittsweise an dem linken Längsträger angeordnet ist, und/oder dass zumindest eine rechte Längsträgerverstärkung vorgesehen ist, die im montierten Zustand zumindest abschnittsweise an dem rechten Längsträger angeordnet ist. Hierdurch kann die Tragfähigkeit verbessert werden.

Vorteilhaft ist es, dass ein von dem Querträger abgewandtes Ende der linken Längsträgerverstärkung im montierten Zustand mit einem Überstand zu einem von dem Querträger abgewandten Ende des linken Längsträgers angeordnet ist und/oder dass ein von dem Querträger abgewandtes Ende der rechten Längsträgerverstärkung im montierten Zustand mit einem Überstand zu einem von dem Querträger abgewandten Ende des rechten Längsträgers angeordnet ist. Hierdurch ist eine vorteilhafte Ausgestaltung möglich, die unter anderem eine vorteilhafte Anbindung an ein Hinterwagenchassis ermöglicht. Es kann auch eine Optimierung des Gewichts erfolgen.

Vorteilhaft ist es, dass zumindest ein Adapter für ein Hinterwagenchassis vorgesehen ist, der im montierten Zustand in einem vom Querträger abgewandten Endbereich des linken Längsträgers mit dem linken Längsträger verbunden ist, und dass zumindest ein Adapter für das Hinterwagenchassis vorgesehen ist, der im montierten Zustand in einem vom Querträger abgewandten Endbereich der linken Längsträgerverstärkung mit der linken Längsträgerverstärkung verbunden ist. Hierdurch kann eine Anbindung an das Hinterwagenchassis vorteilhaft ausgestaltet werden. Insbesondere ist eine hohe Stabilität bei einem optimierten Gewicht möglich.

Vorteilhaft ist es, dass zumindest ein Adapter für ein Hinterwagenchassis vorgesehen ist, der im montierten Zustand in einem vom Querträger abgewandten Endbereich des rechten Längsträgers mit dem rechten Längsträger verbunden ist, und dass zumindest ein Adapter für das Hinterwagenchassis vorgesehen ist, der im montierten Zustand in einem vom Querträger abgewandten Endbereich der rechten Längsträgerverstärkung mit der rechten Längsträgerverstärkung verbunden ist. Hierdurch kann die rechte Seite in entsprechender Weise ausgeführt sein.

Gemäß einer Ausführungsform sind die Längsträgerverstärkung und der Längsträger im montierte Zustand derart aneinander angeordnet, dass die Rücken der jeweiligen Profile einander zugewandt sind. Insbesondere sind Längsträgerverstärkung und Längsträger in dieser Ausführungsform als U-Profil oder C-Profil ausgestaltet. Bevorzugt werden dabei etwaige Anbindungsbauteile, wie der Adapter zum Hinterwagenchassis (OEM-Chassis) und/oder die quer zur Fahrtrichtung angeordneten Bauteile zur Aufnahme der Kugelkopfkupplung, am Rücken der Profile, zwischen den Profilen, montiert. Diese "backto-back" Anordnung hat insbesondere den Vorteil, dass die Biegemomente, die auf die Anbindungsbauteile und Längsprofile wirken, minimiert werden. Beispielsweise weist der Adapter zum Hinterwagenchassis eine aufrechtes plattenförmiges Anbindungselement auf, welches im montierten Zustand zwischen den Profilen und jeweils am Rücken der Profile von Längsträgerverstärkung und Längsträger liegt und vorzugsweise an den Rücken befestigt ist. Ein weiterer Vorteil dieser Ausführungsform ist, dass keine Distanzhülsen für die Montage benötigt werden.

Diese Ausführungsform kann für den linken Längsträger und/oder den rechten Längsträger vorgesehen werden.

Vorzugsweise sind Längsträger und Längsträgerverstärkung im montierten Zustand jeweils miteinander verbunden, insbesondere verschraubt. Gemäß einer Ausführungsform sind ein Längsträger und eine im montierten Zustand daran angeordnete Längsträgerverstärkung aus unterschiedlichen Endlosprofilen gefertigt. Insbesondere können die Profile von Längsträger und Längsträgerverstärkung unterschiedlich breit sein, insbesondere unterschiedlich lange Schenkel aufweisen. Vorzugsweise ist der Rücken von Längsträger und Längsträgerverstärkung jedoch zumindest im Wesentlichen gleich hoch. Dadurch können individuelle Anforderungs- und Lastprofile umgesetzt werden. Auch dies kann für den linken Längsträger und/oder den rechten Längsträger vorgesehen werden.

Gemäß einer anderen Ausführungsform sind Längsträger und Längsträgerverstärkung derart angeordnet, dass die Rücken jeweils zur gleichen Seite gewandt sind, z.B. zur Fahrzeug-Außenseite. Dabei sind Längsträger und Längsträgerverstärkung bevorzugt über Distanzhülsen miteinander verbunden.

Vorteilhaft ist es, dass der linke Längsträger und die linke Längsträgerverstärkung jeweils periodisch angeordnete Durchbrüche aufweisen, wobei im montierten Zustand 25 zumindest zwei Durchbrüche des linken Längsträgers und zumindest zwei Durchbrüche der linken Längsträgerverstärkung übereinanderliegen, an denen der linke Längsträger und die linke Längsträgerverstärkung vorzugsweise mittels Distanzhülsen miteinander verbunden sind Hierdurch ist eine vorteilhafte Verbindung möglich, die insbesondere mit einem geringen Herstellungs- und Montageaufwand realisiert werden kann. Die Durchbrüche sind bevorzugt im Rücken der Profile vorgesehen.

Vorteilhaft ist es entsprechend, dass der rechte Längsträger und die rechte Längsträgerverstärkung jeweils periodisch angeordnete Durchbrüche aufweisen, wobei im montierten Zustand zumindest zwei Durchbrüche des rechten Längsträgers und zumindest zwei Durchbrüche der rechten Längsträgerverstärkung übereinanderliegen, an denen der rechte Längsträger und die rechte Längsträgerverstärkung vorzugsweise mittels Distanzhülsen miteinander verbunden sind.

Vorteilhaft ist es, dass zumindest ein weiterer Querträger vorgesehen ist, der im montierten Zustand an dem Querträger angeordnet ist, und dass der weitere Querträger im montierten Zustand einerseits zumindest mittelbar, insbesondere mittels eines Verbindungswinkels, mit dem linken Längsträger und andererseits zumindest mittelbar, insbesondere mittels eines Verbindungswinkels, mit dem rechten Längsträger verbunden ist. Hierdurch ist eine vorteilhafte Verstärkung am Heck möglich. Insbesondere kann hierdurch eine hohe Belastbarkeit, wie sie beispielsweise für die Montage einer Anhängerkupplung erforderlich sein kann, erreicht werden. Vorteilhaft ist es somit auch, dass eine Anhängerkupplung vorgesehen ist, die im montierten Zustand mit dem weiteren Querträger verbunden ist. Hierdurch kann der Anwendungsbereich weiter vergrößert werden.

Vorteilhaft ist es, dass der linke Längsträger, der rechte Längsträger, der Querträger, gegebenenfalls die linke Längsträgerverstärkung, gegebenenfalls die rechte Längsträgerverstärkung und gegebenenfalls der weitere Querträger alle zumindest im Wesentlichen aus dem gleichen Endlosprofil gebildet sind. Hierdurch können die Herstellungskosten weiter optimiert werden. Alternativ können insbesondere für die linke und/oder rechte Längsträgerverstärkungen und/oder für den weiteren Querträger Profile mit einer anderen Breite und/oder mit einer anderen Materialstärke als für den linken und rechten Längsträger bzw. für den Querträger verwendet werden. Dadurch lassen sich individuelle Anforderungs- und Lastprofile umsetzen.

Somit ist ein Einsatz einer modularen Bauweise für eine Rahmenverlängerung zur Aufgewichtung der Tragfähigkeit und Verwendung einer Anhängervorrichtung möglich.

Je nach Ausgestaltung und Funktionsweise können ein oder mehrere der folgenden Merkmale verwirklicht werden und Vorteile erreicht werden.

Es kann zum einen die Anzahl der Rahmenverlängerungen-Zulieferer deutlich reduziert werden. Idealerweise kann eine Beschränkung auf eine adaptive modulare Bauform erfolgen. Darüber hinaus kann die Anzahl der Rahmenverlängerungen innerhalb der Fahrzeugmodelle und deren Fahrzeugvarianzen, aber auch die allgemeine Anzahl aller Rahmenverlängerungen über alle Fahrzeugmodelle deutlich reduziert werden. Des Weiteren können das Gewicht und die Kosten der Rahmenverlängerungen reduziert werden. Es kann das Problem gelöst werden, dass große Anbauten vermieden werden, um eine Anhängerkupplung anzubauen Die Montage kann vereinfacht werden. Die Logistik kann einschließlich der Lagerung und Bevorratung der Rahmenverlängerungen vereinfacht werden.

Speziell für die Rahmenverlängerung können die folgenden Merkmale und Vorteile erreicht werden.

Es kann ein modular erweiterbares Baukastenprinzip vorgesehen sein, das es den Herstellern ermöglicht, individuell auf die Kundenwünsche einzugehen, als auch es ermöglicht, dass die Kunden im Nachmarkt die Rahmenverlängerung gemäß ihren Wünschen erweitern oder rückbauen.

Ferner ist ein modulares Baukastenprinzip realisierbar, das eine Basis, eine Aufgewichtung und eine Anhängerkupplung umfassen kann, wobei das Profil (Längsprofil) in vorteilhafter Weise ausgestaltet werden kann.

Für die Basis können speziell folgende Merkmale und Vorteile realisiert sein.

Folgende Baugruppen können in der Basisvariante vorgesehen sein. Ein Profil für die eigentliche Rahmenverlängerung, welches vorzugsweise mindestens die folgende Merkmale aufweist einen gleichbleibender Profilquerschnitt und Durchbrüche, die sich mindestens 2-mal wiederholen. Die Durchbrüche sind vorzugsweise so angeordnet, dass der linke als auch der rechte Längsträger identisch sind. Ferner ist ein Bauteil als entsprechende Anbindung ans Hinterwagenchassis, also einen Adapter ans Hinterwagenchassis, vorgesehen. Zusätzlich sind 2 Versteifungswinkel in den Ecken zwischen Längsträgern und Querträger vorgesehen. Der Querträger kann, muss aber nicht, in dieser Ausführung den gleichen Profilquerschnitt wie die Längsträger aufweisen.

Für die Aufgewichtung können speziell folgende Merkmale und Vorteile realisiert sein.

Für eine Aufgewichtung werden weitere Bauteile ergänzt. Eine Demontage der Basisvariante für die aufgewichtete Variante ist vorzugsweise nicht erforderlich. In der zweiten Ausbaustufe wird die Basisvariante vorzugsweise durch Längsträger mit dem gleichen Profilquerschnitt wie dem für die Längsträger der Basisvariante erweitert. Insofern der Querträger mit vorzugsweise gleichem Profilquerschnitt und Versteifungswinkel in der Basisvariante noch nicht enthalten waren, können diese zusätzlich eingebracht werden Das Muster, in dem die Durchbrüche in den Längsträgern der Verstärkungslängsträger eingebracht sind, wiederholt sich im Überlappungsbereich der beiden Profile vorzugsweise mindestens 2-mal identisch zum Längsträgerprofil der Basisvariante und ist so angeordnet, dass die Durchbrüche übereinanderliegen. Dies erlaubt eine Befestigung der Profile zueinander, beispielsweise mittels Distanzhülsen. Die Verstärkungslängsträger werden vorzugsweise Innen angeordnet, ragen dabei weiter nach vorne als die BasisLängsträger und werden durch einen zusätzlichen Adapter mit dem Chassis verbunden.

Für die Anhängervorrichtung können speziell folgende Merkmale und Vorteile realisiert sein.

Für den Anbau einer Anhängervorrichtung (Anhängerkupplung, AHK) werden weitere Bauteile ergänzt. Eine Demontage der aufgewichteten Variante für die AHK-Variante ist vorzugsweise nicht erforderlich In der dritten Ausbaustufe wird die verstärkte Variante vorzugsweise durch einen zusätzlichen Querträger, der ebenfalls den gleichen Querschnitt, wie die Längsträger aufweisen kann, erweitert. Das Profil weist dabei vorzugsweise das gleiche Muster auf, wie der erste Querträger. Das Muster liegt dabei vorzugsweise über dem Muster des Basis-Querträgers. Der Querträger wird vorzugsweise mit Winkeln und Distanzhülsen an der bestehenden Konstruktion befestigt. Die Anhängerkupplung wird beispielsweise durch geschraubte Winkel an dem zusätzlichen Querträger am Lochmuster befestigt.

Bezüglich des Profils können speziell folgende Merkmale und Vorteile realisiert sein.

Das Profil weist vorzugsweise ein C-Profil oder U-Profil im Querschnitt auf. Es kann jedoch entsprechend der notwendigen Komplexität um weitere Merkmale ergänzt werden. Beispielsweise können zusätzlich umgefaltete Blechkanten vorgesehen sein. Es können Sicken im Profil vorgesehen sein. Das Profil kann durch seine Struktur unterschiedliche und zusätzliche Funktionen aufweisen, wie es beispielsweise im folgenden ausgeführt ist.

Große Ausschnitte dienen vorzugsweise dazu, das Gewicht des Profils deutlich zu reduzieren, ohne die Steifigkeit kritisch zu verringern. Die großen Ausschnitte können auch zur Durchführung von diversen Medien genutzt werden. Ferner können diese einen Freiraum für Hände bei der Montage oder für zumindest eine Kabeldurchführung 5 darstellen. Kleine Löcher können zum einen Verschraubungspunkte für die Chassisadapter als auch zu diversen zusätzlichen Anbauteilen, wie z.B. Stützen oder andere Halterungen, sein. Die Bohrungen können ebenfalls für die Anhängerkupplung sowohl bei den Längsprofilen als auch bei dem Querprofil verwendet werden. Durch die identische Größe aller Bohrungslöcher bei einer bevorzugten Ausgestaltung ist es möglich einen Schraubentyp, ggf. sogar eine Schraubenlänge, für alle Montagepunkte einzusetzen. Die erlaubt bspw. sich auf eine Schraubendimension in der Basisvariante zu beschränken. Hinzu kommt das Prinzip nach Poka Yoke, nach dem die Längsträger dann vorzugsweise sowohl in der Basis als auch respektive in der aufgewichteten Variante links und rechts identisch ausgestaltet sind, so dass ein Vertauschen der Träger aufgrund der gleichen konstruktiven Ausgestaltung nicht möglich ist.

Untere Öffnungen erlauben vorzugsweise gleichzeitig ein Abfließen von Nässe aus dem Profil, womit Korrosion vorgebeugt wird, was ebenfalls positiv bei Oberflächenbehandlung, wie KTL, verzinken etc. ist. Die obenliegenden Öffnungen in den Flanken können zur Schraubbefestigung der Garagenwanne genutzt werden. Eine große Anzahl der Löcher lässt beim jeweiligen Fahrzeugmodell offen, welche Löcher zur Anbindung genutzt werden sollen. Durch die obenliegenden Öffnungen in den Flanken kann gegebenenfalls überschüssiger Klebstoff zwischen der Rahmenverlängerung und beispielsweise einer vorgesehenen Garagenwanne austreten.

Es können zusätzlich oder alternativ die folgende Merkmale und Vorteile realisiert sein.

Durch die Vereinheitlichung der Rahmenverlängerung können größere Mengen von Bauteilen gleicher Art bestellt werden, was die Kosten reduziert. Unterschiedliche Längen können nur zwei unterschiedliche Bauteile aufweisen. Der Längsträger der Basisvariante und der Längsträger der Verstärkungsvariante können zwei unterschiedlich ausgestaltete Bauteile sein. Die Teilevielfalt kann reduziert werden. Eine Demontage der Basis- und der Verstärkungsvariante ist nicht notwendigerweise erforderlich, um eine Anhängerkupplung nachzurüsten, sondern es kann eine modulare Erweiterung erfolgen. Ein sicheres und garantiertes richtiges Montieren ans Chassis durch Ausnutzung von Symmetrien und dem Prinzip nach Poka Yoke ist möglich. Eine geringe Schraubenvarianz minimiert eine Verwechslungsgefahr in der Montage. Durch das reduzierte Gewicht und die eingebauten Montagehilfen kann eine Zeitersparnis in der Produktion gewonnen werden, und der Werker wird weniger körperlich belastet.

Durch ein C-Profil kann der Warentransport optimiert werden, und Transportfahrzeuge können maximal ausgelastet werden, was beispielsweise durch Verschachteln möglich ist. Das Verschachteln der Profile kann bei der Lagerung vor der eigentlichen Montage ebenfalls genutzt werden, um eine maximale Anzahl von Rahmenverlängerungen auf minimalen Raum zu gewährleisten. Die großen Ausschnitte können beim Transport ebenfalls als Befestigung dienen. Das Profil bietet an den Bohrungen darüber hinaus eine Vielzahl an Möglichkeiten, um zusätzliche Bauteile, wie z.B. Stützen, anzubinden.

Ein weiterer Vorteil bei der Vereinheitlichung ist die Vereinfachung der realen und simulativen Überprüfung. Neue Konzepte können somit schneller freigegeben werden, was die Entwicklungsdauer und -kosten weiter reduzieren kann. Es können insgesamt viel weniger Real- und Komponententests benötigt werden, was wiederum Zeit und Kosten spart. Zudem kann durch gleiche Bauteile eine Standardisierung bei den unterschiedlichen Fahrzeugen und Herstellern erzielt werden, was auch für Nachrüstungen im Nachmarkt die Logistik vereinfacht. Wenn Fehler auftreten, können diese auch bei den anderen Fahrzeugen überprüft werden. Taucht dieser Fehler jedoch nur bei einem Fahrzeugtyp auf, kann ein Fehler an der Rahmenverlängerung ausgeschlossen werden, und die Fehlersuche wird beschleunigt.

Zudem können Änderungen und Anpassungen schneller an alle Fahrzeugmodelle angetragen werden, da alle auf der gleichen Basis an Bauteilen arbeiten können. Testergebnisse und Erkenntnisse können gegebenenfalls über alle Fahrzeugmodelle weitergegeben werden. Durch die Vereinheitlichung einer Rahmenverlängerung können wiederum auch die Varianz der Zukaufteile reduziert werden und die Menge auf das reduzierte Sortiment erhöht werden, was wiederum die Kosten für die Zukaufteile senkt. Ein Lochbild ist ebenfalls nutzbar zur Montage von beispielsweise Lastenträgern. Im Profil können zusätzliche Kabel geführt werden, da sie durch das C-Profil oder einem ähnlichen Profil nicht herausfallen können, und mit den Bohrlöchern und bspw. Kabelhaltern können diese einfach fixiert werden

Ausführungsbeispiele der Erfindung sind in den Zeichnungen dargestellt und werden in der nachfolgenden Beschreibung näher erläutert. Es zeigen:
- Fig. 1: eine mögliche Ausgestaltung einer Basisvariante der Rahmenverlängerung in einer schematischen, räumlichen Darstellung;
- Fig. 2: eine mögliche Ausgestaltung einer verstärkten Variante der Rahmenverlängerung in einer schematischen, räumlichen Darstellung, wobei Längsträger und Längsträgerverstärkungen dargestellt sind;
- Fig. 3: eine Anordnung mit einem Längsträger der Basisvariante, der mit einer Längsträgerverstärkung verstärkt ist, wobei der Längsträger und die Längsträgerverstärkung im montierten Zustand im Profil dargestellt sind;
- Fig. 4: eine Anordnung mit einem Längsträger der Basisvariante, der mit einer Längsträgerverstärkung verstärkt ist, wobei der Längsträger und die Längsträgerverstärkung im montierten Zustand von einer Seite dargestellt sind;
- Fig. 5: die in Fig. 2 gezeigte Rahmenverlängerung, die mit einem Querträger verstärkt ist, entsprechend einer weiteren möglichen Ausgestaltung in einer schematischen, räumlichen Darstellung;
- Fig. 6: ein Längsprofil in einer auszugsweisen, schematischen, räumlichen Darstellung;
- Fig. 7: das in Fig. 6 dargestellte Längsprofil aus der mit VII bezeichneten Blickrichtung;
- Fig. 8: einen Ausschnitt einer Ausgestaltung der Rahmenverlängerung in einer schematischen, räumlichen Detaildarstellung, wobei eine Verstärkung über ein Distanzelement gezeigt ist;
- Fig. 9: einen Ausschnitt einer Ausgestaltung der Rahmenverlängerung in einer schematischen, räumlichen Detaildarstellung, wobei eine mögliche Ausgestaltung einer Anbindung an einem Längsträger und einer Längsträgerverstärkung zu einem Hinterwagenchassis gezeigt ist;
- Fig. 10: einen Ausschnitt einer Ausgestaltung der Rahmenverlängerung in einer schematischen, räumlichen Detaildarstellung, wobei eine mögliche Ausgestaltung einer Anbindung an einer Längsträgerverstärkung zu einem Hinterwagenchassis gezeigt ist;
- Fig. 11: einen Ausschnitt einer Ausgestaltung der Rahmenverlängerung in einer schematischen, räumlichen Darstellung, wobei eine Anhängerkupplung montiert ist;
- Fig. 12: einen auszugsweisen Schnitt durch die in Fig. 11 gezeigte Ausgestaltung in einer schematischen Darstellung;
- Fig. 13: ein Detail der in Fig. 12 gezeigten Darstellung, wobei eine Verbindung eines Querträgers eines weiteren Querträgers und eines Distanzelements in einer auszugsweisen Schnittdarstellung gezeigt ist; und
- Fig. 14: eine auszugsweise Darstellung einer Rahmenverlängerung mit einer Anhängerkupplung in einer auszugsweisen, schematischen, räumlichen Darstellung entsprechend einer abgewandelten Ausgestaltung;
- Fig. 15: eine auszugsweise Darstellung einer Rahmenverlängerung gemäß einer "back-to-back" Ausführungsform; und
- Fig. 16: einen Querschnitt durch einen Längsträger und eine Längsträgerverstärkung gemäß der "back-to-back" Ausführungsform.

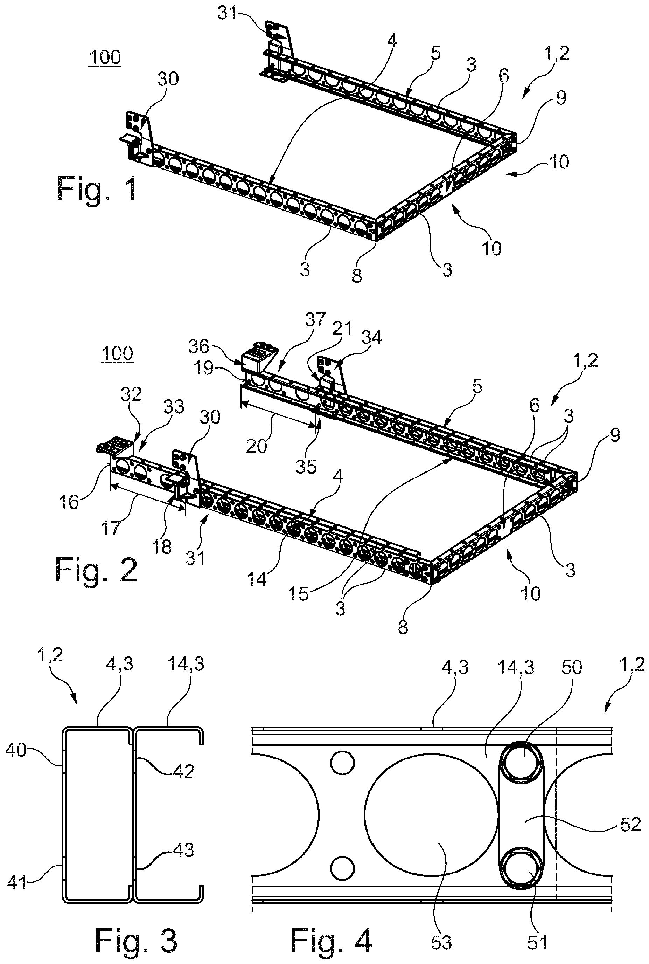

Fig. 1 zeigt eine mögliche Ausgestaltung einer Basisvariante der Rahmenverlängerung 1 in einer schematischen, räumlichen Darstellung. Die Rahmenverlängerung 1 dient für ein Freizeitfahrzeug 100. Hierbei wird die Rahmenverlängerung 1 mit einem modularen System 2 hergestellt. Das Freizeitfahrzeug 100 kann insbesondere als Wohnmobil oder Wohnwagen ausgebildet sein. Die Rahmenverlängerung 1 eignet sich besonders für solche Freizeitfahrzeuge 100. Die Ausgestaltung des modularen Systems 2 ergibt sich auch aus der Beschreibung der nachfolgend dargestellten möglichen Ausgestaltungen von Rahmenverlängerungen 1.

Das modulares System 2 dient zur Bildung einer Rahmenverlängerung 1 eines Fahrzeugrahmens (Freizeitfahrzeugrahmens) 70 des Freizeitfahrzeugs 1 mit standardisierten Eigenschaften. Somit können unterschiedliche Rahmenverlängerungen 1 mit einem modularen System 2 generiert werden. Hierbei ist zumindest einem Endlosprofil 3 vorgesehen. Bevorzugt macht das modulare System 2 von genau einem Endlosprofil 3 Gebrauch, so dass sich weitere Vorteile realisieren lassen. Das Endlosprofil 3 dient zur Bildung der Rahmenverlängerung 1, wobei weitere Komponenten und Bauteile genutzt werden können. Allgemein sind aus dem Endlosprofil 3 mindestens zwei unterschiedliche Rahmenverlängerungen 1, vorzugsweise jedoch mehr als zwei Rahmenverlängerungen 1, mit standardisierten Eigenschaften realisierbar.

Die Rahmenverlängerung umfasst in diesem Ausführungsbeispiel einen linken Längsträger 4 und einen rechten Längsträger 5. Die Längsträger 4, 5 sind vorzugsweise zumindest im Wesentlichen aus dem Endlosprofil 3 gebildet. Hierbei können aber beispielsweise noch Nachbearbeitungen, wie Lackierungen oder zerspanende Bearbeitungen, oder Verformungen, insbesondere eine Bearbeitung durch Biegen, oder andere Modifikationen vorgenommen werden.

Außerdem ist ein Querträger 6 vorgesehen, der vorzugsweise in entsprechender Weise zumindest im Wesentlichen aus dem Endlosprofil 3 gebildet ist. Der Querträger ist einerseits mit dem dem linken Längsträger 4 und andererseits mit dem rechten Längsträger 5 verbunden. Zur Verbindung sind Versteifungselemente 8, 9 vorgesehen. Mit diesen ist der Querträger mit dem linken Längsträger 4 und dem rechten Längsträger 5 verbunden. Die Versteifungselemente 8, 9 sind in diesem Ausführungsbeispiel als Versteifungswinkel 8,9 ausgebildet.

Fig. 2 zeigt eine mögliche Ausgestaltung einer verstärkten Variante der Rahmenverlängerung 1 in einer schematischen, räumlichen Darstellung. In diesem Ausführungsbeispiel sind eine linke Längsträgerverstärkung 14, die abschnittsweise an dem linken Längsträger 4 angeordnet ist, und eine rechte Längsträgerverstärkung 15 vorgesehen, die abschnittsweise an dem rechten Längsträger 5 angeordnet ist.

Die Längsträger 4, 5 und die Längsträgerverstärkungen 14, 15 sind hierbei jeweils links und recht nur teilweise überlappend nebeneinander angeordnet. Dies erfolgt so, dass ein von dem Querträger 6 abgewandtes Ende 16 der linken Längsträgerverstärkung 14 im montierten Zustand mit einem Überstand 17 zu einem von dem Querträger 6 abgewandelten Ende 18 des linken Längsträgers 4 angeordnet ist. Entsprechend erfolgt dies so, dass ein von dem Querträger 6 abgewandtes Ende 19 der rechten Längsträgerverstärkung 15 im montierten Zustand mit einem Überstand 20 zu einem von dem Querträger 6 abgewandelten Ende 21 des rechten Längsträgers 5 angeordnet ist. Hierbei können der jeweilige Längsträger 4, 5 und die jeweils zugeordnete Längsträgerverstärkung 14, 15 unterschiedlich lang sein. Die Längsträger 4, 5 sind aber vorzugsweise gleich lang ausgestaltet. Ferner sind die Längsträgerverstärkungen 14, 15 vorzugsweise gleich lang ausgestaltet.

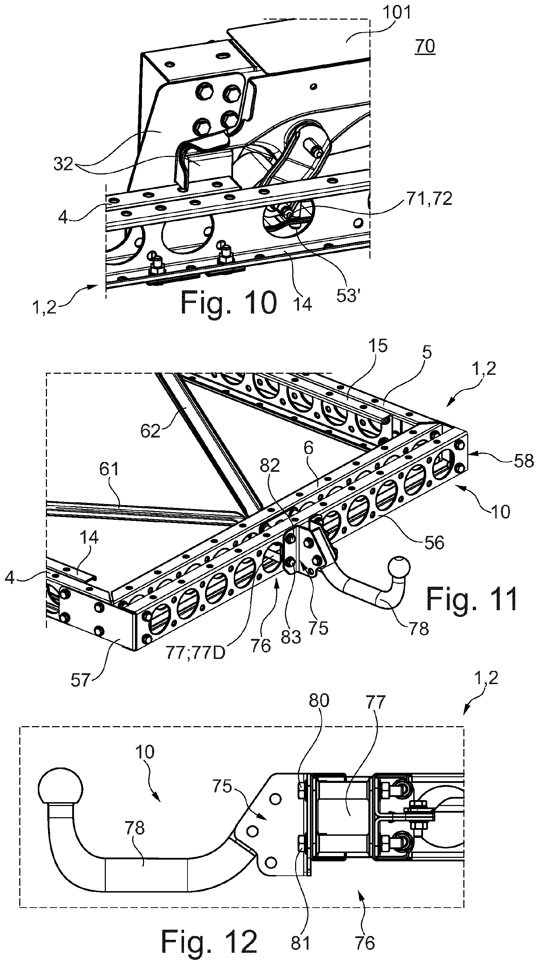

Ferner ist ein Adapter 30 für ein in Fig. 10 dargestelltes Hinterwagenchassis des Freizeitfahrzeugs 100 vorgesehen. Der Adapter 30 ist in einem vom Querträger 6 abgewandten Endbereich 31 des linken Längsträgers 4 mit dem linken Längsträger 4 verbunden. Außerdem ist ein Adapter 32 für das Hinterwagenchassis vorgesehen, der in einem vom Querträger 6 abgewandten Endbereich 33 der linken Längsträgerverstärkung 14 mit der linken Längsträgerverstärkung 14 verbunden ist. Somit ist auf der linken Seite eine vorteilhafte Befestigung der Rahmenverlängerung 1 an dem Hinterwagenchassis möglich.

Entsprechend ist ein Adapter 34 für das Hinterwagenchassis vorgesehen, der in einem vom Querträger 6 abgewandten Endbereich 35 des rechten Längsträgers 5 mit dem 25 rechten Längsträger 5 verbunden ist. Außerdem ist ein Adapter 36 für das Hinterwagenchassis vorgesehen, der in einem vom Querträger 6 abgewandten Endbereich 37 der rechten Längsträgerverstärkung 15 mit der rechten Längsträgerverstärkung 15 verbunden ist. Somit ist auch auf der rechten Seite eine vorteilhafte Befestigung möglich, die vorzugsweise symmetrisch zu der linken Seite ausgestaltet ist.

Fig. 3 zeigt eine Anordnung mit einem Längsträger 4 der Basisvariante, der mit einer Längsträgerverstärkung 14 verstärkt ist, wobei der Längsträger 4 und die Längsträgerverstärkung 14 im Profil dargestellt sind. Zur Vereinfachung der Darstellung ist die Situation auf der linken Seite dargestellt. Die Ausgestaltung auf der rechten Seite, also bezüglich des Längsträgers 5 und der Längsträgerverstärkung 15, ergibt sich in entsprechender Weise.

Der linke Längsträger 4 und die linke Längsträgerverstärkung 14 weisen jeweils periodisch angeordnete Durchbrüche 40, 41, 42, 43 auf. Hierbei sind zwei Durchbrüche 40, 41 des linken Längsträgers 4 und zwei Durchbrüche der linken Längsträgerverstärkung 14 (paarweise) übereinanderliegen angeordnet. Die Ausgestaltung an der linken Seite ist im folgenden auch anhand Fig. 4 weiter ausgeführt.

Fig. 4 zeigt eine Anordnung mit einem Längsträger 4 der Basisvariante, der mit der Längsträgerverstärkung 14 verstärkt ist, wobei der Längsträger 4 und die Längsträgerverstärkung 14 im montierten Zustand von einer Seite dargestellt sind. in den Durchbrüchen 40, 41, 42, 43 sind der linke Längsträger 4 und die linke Längsträgerverstärkung 14 in diesem Ausführungsbeispiel über Distanzhülsen 50, 51 miteinander verbunden sind. In entsprechender Weise können auch weitere Befestigungen über Distanzhülsen 50, 51 an weiteren Durchbrüchen des linken Längsträgers 4 und der linken Längsträgerbefestigung 14 vorgesehen sein, so dass sich dann eine Verbindung über mehr als zwei Distanzhülsen 50, 51 ergibt. Ferner 20 können auch andere Befestigungselemente zusätzlich oder alternativ zu den Distanzhülsen 50, 51 zum Einsatz kommen. Außerdem können eine Vielzahl von großen Ausschnitten 53 in dem Endlosprofil 3 vorgesehen sein, was exemplarisch an den Längsträgern 4, 5 gezeigt ist.

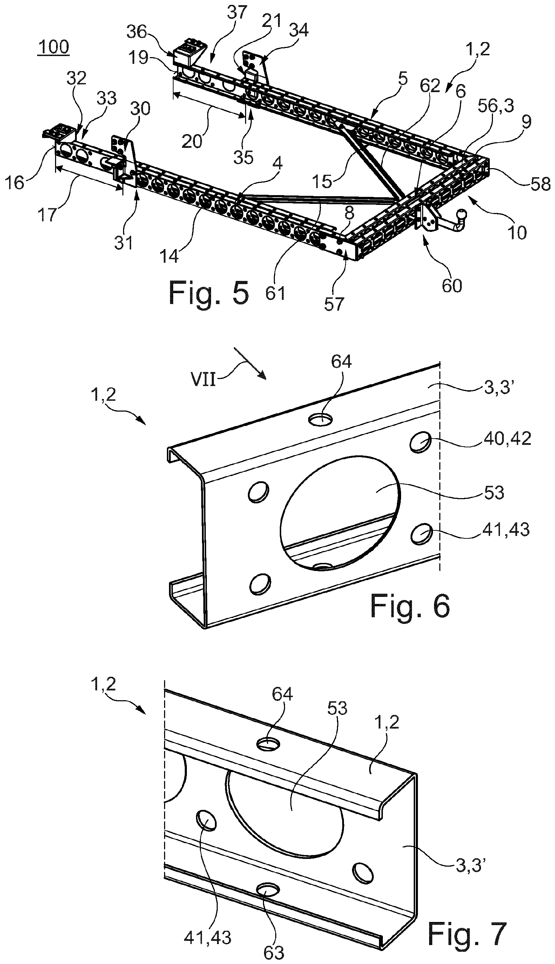

Fig. 5 zeigt die in Fig. 2 gezeigte Rahmenverlängerung 1, die mit einem Querträger 56 verstärkt ist, entsprechend einer weiteren möglichen Ausgestaltung in einer schematischen, räumlichen Darstellung. Der Querträger 56 ist an dem Querträger 6 angeordnet. Der Querträger 56 ist einerseits über einen Verbindungswinkel 57 mit dem linken Längsträger 4 und andererseits über einen Verbindungswinkel 58 mit dem rechten Längsträger 5 verbunden Außerdem ist in diesem Ausführungsbeispiel zusätzlich eine optionale Anhängerkupplung 60 vorgesehen. Die Anhängerkupplung 60 ist mit dem Querträger 56 verbunden. Zur Stabilisierung können Diagonalstreben 61, 62 vorgesehen sein.

Fig. 6 zeigt das Längsprofil 3` des Endlosprofils 3 in einer auszugsweisen, schematischen, räumlichen Darstellung. Ferner zeigt Fig. 7 das in Fig. 6 dargestellte Längsprofil 3' aus der mit VII bezeichneten Blickrichtung. Der linke Längsträger 4, der rechte Längsträger 5, der Querträger 6, und bei den in Fig. 2 bis 5 dargestellten Ausführungsbeispielen auch die linke Längsträgerverstärkung 14 und die rechte Längsträgerverstärkung 15 sowie bei dem in Fig. 5 dargestellt Ausführungsbeispiel auch der Querträger 56 sind alle zumindest im Wesentlichen aus dem gleichen Endlosprofil 3 gebildet sind. Es können untere Öffnungen 63 und obenliegende Öffnungen 64 vorgesehen sein.

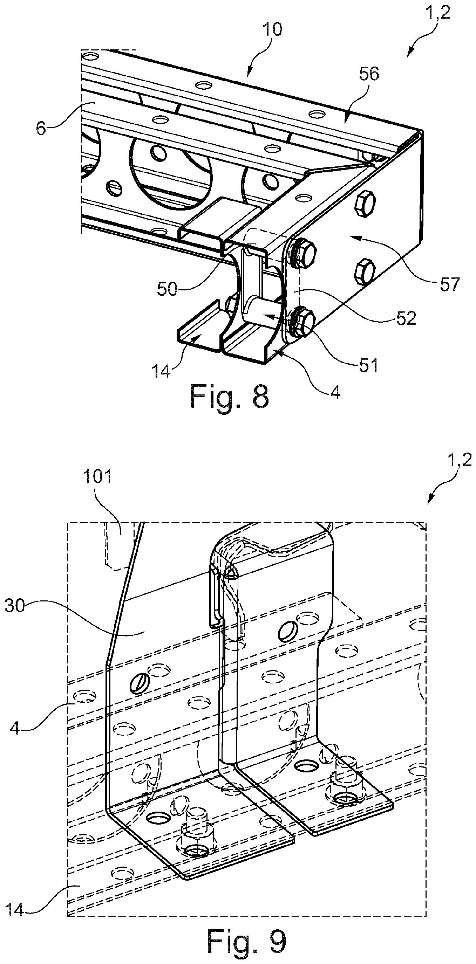

Weitere mögliche Ausgestaltungen und diesbezügliche Vorteile, die sich insbesondere auf eine Anhängerkupplung 60 beziehen, sind im folgenden anhand der Fig. 8 bis 14 beschrieben.

Fig. 8 zeigt einen Ausschnitt einer Ausgestaltung der Rahmenverlängerung 1 in einer schematischen, räumlichen Detaildarstellung, wobei eine Verstärkung über ein Distanzelement 52 gezeigt ist. Das Distanzelement 52 weist mehrere Distanzhülsen 50, 51 auf. Das modulares System 2, das zur Bildung einer Rahmenverlängerung 1 eines Freizeitfahrzeugrahmens 70 mit standardisierten Eigenschaften mit zumindest einem Endlosprofil 3 und zur Bildung der Rahmenverlängerung 1 dient, ist anhand der Ausgestaltung der Rahmenverlängerung 1 beschrieben. Hierbei können aus dem Endlosprofil 3 mindestens zwei unterschiedliche Rahmenverlängerungen 1 mit standardisierten Eigenschaften ausgestaltet werden.

Der Querträger 56 ist aus dem Endlosprofil 3 gebildet, wobei der Querträger 56 im montierten Zustand an einem Heck 10 des Freizeitfahrzeugs 100 angeordnet ist. Ferner ist in diesem Ausführungsbeispiel eine Einrichtung 75 für eine Anhängerkupplung 60 vorgesehen. Die Einrichtung 75 ist mit dem Querträger 56 verbunden. Dadurch ist eine Anordnung 76 mit dem Querträger 56 und der Einrichtung 75 für die Anhängerkupplung 60 gegeben. Die Anordnung 76 wird aus dem modularen System 2 hergestellt.

In diesem Ausführungsbeispiel sind ein linker Längsträger 4 und eine linke Längsträgerverstärkung 14 vorgesehen. Die Längsträgerverstärkung 14 ist abschnittsweise an dem linken Längsträger 4 angeordnet. Ferner ist ein Distanzelement 52 vorgesehen, das zwischen dem linken Längsträger 4 und der linken Längsträgerverstärkung 14 angeordnet ist. Der linke Längsträger 4, die linke Längsträgerverstärkung 14 und das Distanzelement 52 sind miteinander verbunden.

Entsprechend ist ein rechter Längsträger 5 vorgesehen. Ferner ist eine rechte Längsträgerverstärkung 15 vorgesehen, die abschnittsweise an dem rechten Längsträger 5 angeordnet ist. Ein Distanzelement 52 ist zwischen dem rechten Längsträger 5 und der rechten Längsträgerverstärkung 15 angeordnet. Der rechte Längsträger 5, die rechte Längsträgerverstärkung 15 und das Distanzelement 52 sind miteinander verbunden.

Fig. 9 zeigt einen Ausschnitt einer Ausgestaltung der Rahmenverlängerung 1 in einer schematischen, räumlichen Detaildarstellung, wobei eine mögliche Ausgestaltung einer Anbindung an einem Längsträger 4 und einer Längsträgerverstärkung 14 zu einem Hinterwagenchassis 101 gezeigt ist.

Die Form des Basisprofils, also des Längsträgers 5, das aus einem Endlosprofil 3 gebildet sein kann, macht es bei dieser Ausgestaltung notwendig, dass mindestens ein Distanzelement 52 (Distanzstück) bzw. Distanzhülsen 50, 51 pro Seite eingesetzt werden. Dies ist insbesondere dann erforderlich, wenn der Querschnitt einer Längsträgerverstärkung 14 nicht gleichbleibend ist und somit die Aufnahme des Adapters 30 (Fig. 5) zum Hinterwagenchassis 101 für die Längsträgerverstärkung 14 nicht genutzt werden kann.

Fig. 10 zeigt einen Ausschnitt einer Ausgestaltung der Rahmenverlängerung 1 in einer schematischen, räumlichen Detaildarstellung, wobei eine mögliche Ausgestaltung einer Anbindung an einer Längsträgerverstärkung 14 zu einem Hinterwagenchassis 101 gezeigt ist. Die linke Längsträgerverstärkung 14 weist einen Ausschnitt 53` auf. Ferner ist ein Adapter 36 für die linke Längsträgerverstärkung 14 so an der linken Längsträgerverstärkung 14 angeordnet, dass ein Befestigungsmittel 71 eines hinteren Blattfederauges 72 des Hinterwagenchassis 101 teilweise in den Ausschnitt 53` der linken Längsträgerverstärkung 14 ragt. Entsprechend ist die rechte Seite ausgeführt. Die rechte Längsträgerverstärkung 15 weist also ebenfalls so einen Ausschnitt 53` auf, wobei ein Adapter 36 für die rechte Längsträgerverstärkung 15 im montierten Zustand so an der rechten Längsträgerverstärkung 15 angeordnet ist, dass ein entsprechend dem Befestigungsmittel 71 ausgestaltetes Befestigungsmittel eines dem hinteren Blattfederauge 72 des Hinterwagenchassis 101 entsprechendes Blattfederauge in den entsprechenden Ausschnitt 53` der rechten Längsträgerverstärkung 15 ragt.

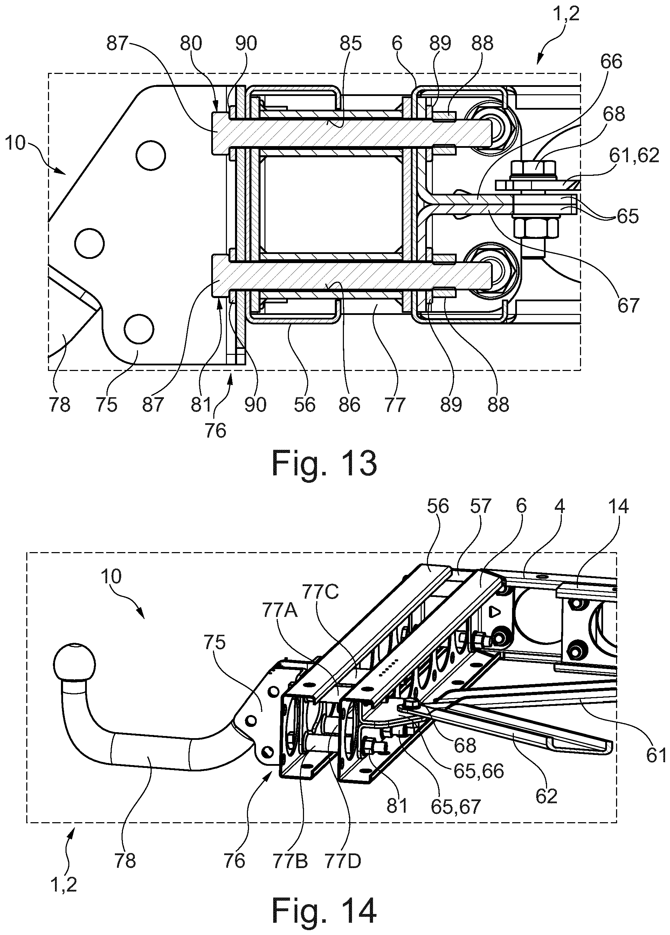

Fig. 11 bis 13 zeigen eine mögliche Ausbaustufe mit einer Anhängerkupplung 60. Fig. 11 zeigt hierbei einen Ausschnitt einer Ausgestaltung der Rahmenverlängerung 1 in einer schematischen, räumlichen Darstellung, wobei die Anhängerkupplung 60 vollständig montiert ist. Fig. 12 zeigt einen auszugsweisen Schnitt durch die in Fig. 11 gezeigte Ausgestaltung in einer schematischen Darstellung. Ferner zeigt Fig. 13 ein Detail der in Fig. 12 gezeigten Darstellung, wobei eine Verbindung eines Querträgers 56, eines Querträgers 6 und eines Distanzelements 52 in einer auszugsweisen Schnittdarstellung gezeigt ist.

Die Einrichtung 75 für die Anhängerkupplung 60 ist in diesem Ausführungsbeispiel als Aufnahmeeinrichtung 75, insbesondere als Schwanenhalsaufnahme 75, ausgestaltet. Dadurch kann ein Schwanenhals 78 an der Aufnahmeeinrichtung 75 montiert und gegebenenfalls auch wieder demontiert werden, was durch einen Nutzer erfolgen kann. Zusätzlich oder alternativ ermöglicht diese Ausgestaltung auch, dass je nach Anwendungsfall durch das modulare System 2 zumindest zwei Ausgestaltungen für einen Schwanenhals 78 oder dergleichen vorgesehen sind, die dann wahlweise montiert werden können. Es kann auch eine Umrüstung an andere Anwendungsfälle ermöglicht werden, ohne dass ein Rückbau der übrigen Komponenten der Rahmenverlängerung 1 erforderlich wäre.

Der Querträger 6 ist in einem Bereich des Querträgers 56, in dem die Einrichtung 75 für die Anhängerkupplung 60 mit dem Querträger 56 verbunden ist, mit dem Querträger 56 verbunden. In diesem Ausführungsbeispiel ist hierfür ein Distanzelement 77 vorgesehen, das an dem Bereich des Querträgers 56, in dem die Einrichtung 75 für die Anhängerkupplung 60 mit dem Querträger 56 verbunden ist, zwischen dem Querträger 56 und dem Querträger 6 angeordnet ist. Hierbei sind der Querträger 56, der Querträger 6 und das Distanzelement 77 durch Verschrauben miteinander verbunden.

Außerdem sind Verbindungselemente 80, 81, 82, 83 vorgesehen, die einerseits an dem Querträger 56 und andererseits an dem Querträger 6 abgestützt sind.

Das Distanzelement 77 weist Durchgangsbohrung 85, 86 zur rechten Seite hin und entsprechende Durchgangsbohrungen zur linken Seite hin auf, durch die sich im montierten Zustand die Verbindungselemente 80, 81, 82, 83 erstrecken. Die Verbindungselemente 80, 81, 82, 83 sind einerseits an dem Querträger 56 und andererseits an dem Querträger 6 abgestützt. Die Verbindungselemente 80, 81, 82, 83 sind jeweils durch einen Schraubbolzen 87 und eine Mutter 88 gebildet, wobei zusätzlich Beilagscheiben 89, 90, Federringe oder dergleichen zum Einsatz kommen können.

Das Distanzelement 77 kann bei einer abgewandelten Ausgestaltung auch Innengewinde an den Durchgangsbohrungen 85, 86 aufweisen. Die Diagonalstrebenbefestigung 65 kann Winkel 66, 67 aufweisen, an denen die Diagonalstreben 61, 62 mittels eines Befestigungsmittels 68, insbesondere einer Schraubbefestigung 68, befestigt sind.

Fig. 14 zeigt eine auszugsweise Darstellung einer Rahmenverlängerung 1 mit einer Anhängerkupplung 60 in einer auszugsweisen, schematischen, räumlichen Darstellung entsprechend einer abgewandelten Ausgestaltung. Hierbei sind statt eines Distanzelements 77 vier Distanzelemente 77A, 77B, 77C, 77D vorgesehen, die jeweils eine Durchgangsbohrung 85, 86 oder bei einer weiter abgewandelte Ausgestaltung Durchgangsbohrungen 85, 86 mit Innengewinde aufweisen.

Ferner kann eine Diagonalstrebenbefestigung 65 in dem Bereich des Querträgers 56, in dem die Einrichtung 75 für die Anhängerkupplung 60 mit dem Querträger 56 verbunden ist, vorgesehen sein, an der die Diagonalstreben 61, 62 befestigt sind. Dadurch kann die Stabilität weiter verbessert werden. Die Diagonalstrebenbefestigung 65 kann mit in das Paket integriert werden, bei dem der Querträgers 56 und der Querträger 6 über das Distanzelement 77 beziehungsweise die Distanzelemente 77A, 77B, 77C, 77D mittels der Verbindungselemente 80, 81, 82, 83 verbunden sind. Dies ist auch in Fig. 13 veranschaulicht.

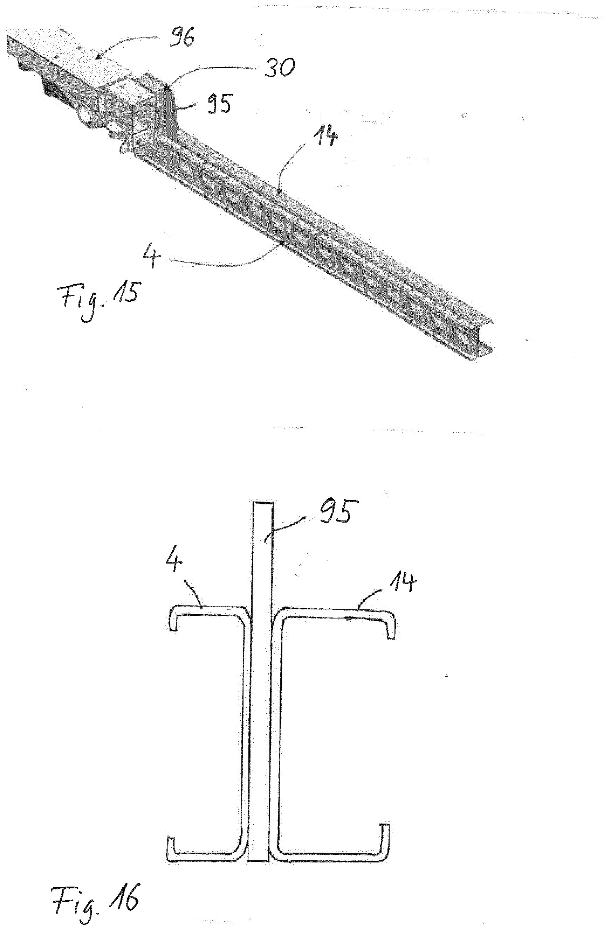

Fig. 15 zeigt eine weiteren Ausführungsform, bei der die Längsträgerverstärkung 14 und der Längsträger 4 im montierten Zustand derart aneinander angeordnet sind, dass die Rücken der jeweiligen Profile einander zugewandt sind. Es ist nur die linke Seite der Rahmenverlängerung dargestellt, die rechte Seite mit Längsträgerverstärkung 15 und Längsträger 5 kann ebenso ausgestaltet sein. Hier sind Längsträgerverstärkung 14 und Längsträger 4 als C-Profil ausgestaltet. Der Adapter 30 zum Hinterwagenchassis 96 weist ein plattenförmiges Anbindungselement 95 auf, welches zwischen den Profilen 4, 14 und jeweils am Rücken der Profile von Längsträgerverstärkung 14 und Längsträger 4 angeordnet ist.

Die Längsträgerverstärkung 4 ist insbesondere ein AHK-Längsträger.

Fig. 16 zeigt die Anbindungsstelle zum Hinterwagenchassis 96 der Ausführungsform der Fig. 15 im Querschnitt. Dabei ist zu sehen, dass das plattenförmige Anbindungselement 95 zwischen den Rücken der Längsträgerverstärkung 14 und dem Längsträger 4 liegt. In diesem Beispiel ist die Längsträgerverstärkung 14 aus einem breiteren Profil gefertigt als der Längsträger 4, um eine besonders hohe Auflastung zu gewährleisten.

Die Erfindung ist nicht auf die beschriebenen Ausgestaltungen beschränkt.

## Patentansprüche

1. Modulares System (2) zur Bildung einer Rahmenverlängerung (1) eines Freizeitfahrzeugrahmens (70) mit standardisierten Eigenschaften mit zumindest einem Endlosprofil (3), das zur Bildung der Rahmenverlängerung (1) dient, wobei aus dem zumindest einem Endlosprofil (3) mindestens zwei unterschiedliche Rahmenverlängerungen (1) mit standardisierten Eigenschaften ausgestaltbar sind,
**dadurch gekennzeichnet,**
**dass** zumindest ein Querträger (56) vorgesehen ist, der zumindest im Wesentlichen aus einem Endlosprofil (3) gebildet ist, wobei der Querträger (56) im montierten Zustand an einem Heck (10) des Freizeitfahrzeugs angeordnet ist, und dass eine Einrichtung (75) für eine Anhängerkupplung (60) vorgesehen ist, die im montierten Zustand zumindest mit dem Querträger (56) verbunden ist.

2. Modulares System nach Anspruch 1,
**dadurch gekennzeichnet,**
**dass** die Einrichtung (75) für die Anhängerkupplung (60) als Aufnahmeeinrichtung (75), insbesondere als Schwanenhalsaufnahme (75), ausgestaltet ist.

3. Modulares System nach Anspruch 1 oder 2,
**dadurch gekennzeichnet,**
**dass** zumindest ein weiterer Querträger (6) vorgesehen ist und dass der weitere Querträger (6) im montierten Zustand zumindest in einem Bereich des Querträgers (56), in dem die Einrichtung (75) für die Anhängerkupplung (60) mit dem Querträger (56) verbunden ist, zumindest mittelbar mit dem Querträger (56) verbunden ist.

4. Modulares System nach Anspruch 3,
**dadurch gekennzeichnet,**
**dass** zumindest ein Distanzelement (77) vorgesehen ist, das im montierten Zustand zumindest an dem Bereich des Querträgers (56), in dem die Einrichtung (75) für die Anhängerkupplung (60) mit dem Querträger (56) verbunden ist, zwischen dem Querträger (56) und dem weiteren Querträger (6) angeordnet ist.

5. Modulares System nach Anspruch 4,
**dadurch gekennzeichnet,**
**dass** zumindest der Querträger (56), der weitere Querträger (6) und das Distanzelement (77) im montierten Zustand miteinander verbunden, insbesondere miteinander verschraubt, sind.

6. Modulares System nach Anspruch 4 oder 5,
**dadurch gekennzeichnet,**
a) dass zumindest ein Verbindungselement (80, 81, 82,83) vorgesehen ist, das beziehungsweise die im montierten Zustand einerseits zumindest mittelbar an dem Querträger (56) und andererseits zumindest mittelbar an dem weiteren Querträger (6) abgestützt ist beziehungsweise sind, und/oder b1) dass das Distanzelement (77) zumindest ein Innengewinde aufweist oder b2) dass das Distanzelement (77) zumindest eine Durchgangsbohrung 20 (85, 86) aufweist, durch die sich im montierten Zustand ein Verbindungselement (80, 81, 82, 83) erstreckt, das einerseits zumindest mittelbar an dem Querträger (56) und andererseits zumindest mittelbar an dem weiteren Querträger (6) abgestützt ist.

7. Modulares System nach einem der Ansprüche 1 bis 6,
**dadurch gekennzeichnet,**
a) **dass** zumindest ein linker Längsträger (4) vorgesehen ist, dass zumindest eine linke Längsträgerverstärkung (14) vorgesehen ist, die im montierten Zustand zumindest abschnittsweise an dem linken Längsträger (4) angeordnet ist, dass zumindest ein Distanzelement (52) vorgesehen ist, das im montierten Zustand zwischen dem linken Längsträger (4) und der linken Längsträgerverstärkung (14) angeordnet ist, und dass der linke Längsträger (4), die linke Längsträgerverstärkung (14) und das Distanzelement (52) im montierten Zustand miteinander verbunden sind und/oder
b) **dass** zumindest ein rechter Längsträger (5) vorgesehen ist, dass zumindest eine rechte Längsträgerverstärkung (15) vorgesehen ist, die im montierten Zustand zumindest abschnittsweise an dem rechten Längsträger (5) angeordnet ist, dass zumindest ein Distanzelement (52) vorgesehen ist, das im montierten Zustand zwischen dem rechten Längsträger (5) und der rechten Längsträgerverstärkung (15) angeordnet ist, und dass der rechte Längsträger (5), die rechte Längsträgerverstärkung (15) und das Distanzelement (52) im montierten Zustand miteinander verbunden sind.

8. Modulares System nach Anspruch 7,
**dadurch gekennzeichnet,**
a) **dass** die linke Längsträgerverstärkung (14) einen Ausschnitt (53`) aufweist und dass ein Adapter (36) für die linke Längsträgerverstärkung (14) im montierten Zustand so an der linken Längsträgerverstärkung (14) angeordnet ist, dass ein Befestigungsmittel (71) eines hinteren Blattfederauges (71) des Hinterwagenchassis (101) im montierten Zustand zumindest teilweise in den Ausschnitt (53`) der linken Längsträgerverstärkung (14) ragt beziehungsweise
b) **dass** die rechte Längsträgerverstärkung (15) einen Ausschnitt (53`) aufweist und dass ein Adapter (36) für die rechte Längsträgerverstärkung 20 (15) im montierten Zustand so an der rechten Längsträgerverstärkung (15) angeordnet ist, dass ein Befestigungsmittel (71) eines hinteren Blattfederauges (72) des Hinterwagenchassis (101) im montierten Zustand zumindest teilweise in den Ausschnitt (53`) der rechten Längsträgerverstärkung (15) ragt.

9. Modulares System nach einem der Ansprüche 1 bis 8,
**dadurch gekennzeichnet,**
**dass** der linke Längsträger (4) und die linke Längsträgerverstärkung (14) jeweils zumindest im Wesentlichen aus einem Profil (3) gebildet sind, welches einen Rücken aufweist, von dem ein oder mehr Schenkel abstehen, und dass der linke Längsträger (4) und die linke Längsträgerverstärkung (14) im montierten Zustand derart aneinander angeordnet sind, dass die Rücken der jeweiligen Profile einander zugewandt sind, und/oder
**dass** der rechte Längsträger (5) und die rechte Längsträgerverstärkung (15) jeweils zumindest im Wesentlichen aus einem Profil (3) gebildet sind, welches einen Rücken aufweist, von dem ein oder mehr Schenkel abstehen, und dass der rechte Längsträger (5) und die rechte Längsträgerverstärkung (15) im montierten Zustand derart aneinander angeordnet sind, dass die Rücken der jeweiligen Profile einander zugewandt sind.

10. Anordnung (76) mit einem Querträger (56) und einer Einrichtung (75) für eine Anhängerkupplung (60), welche Anordnung (76) aus dem modularen System (2) nach einem der Ansprüche 1 bis 9 hergestellt ist.

11. Rahmenverlängerung (1) für ein Freizeitfahrzeug (100), welches aus dem modularen System (2) nach einem der Ansprüche 1 bis 9 hergestellt ist.

12. Freizeitfahrzeug (100), insbesondere Wohnmobil oder Wohnwagen, mit einer Rahmenverlängerung (1) nach Anspruch 11.
